Europäisches Patentamt

European Patent Office

Office européen des brevets

(11) Publication number: **0 078 515**
**A1**

# (12) EUROPEAN PATENT APPLICATION

(21) Application number: **82109990.0**

(22) Date of filing: **28.10.82**

(51) Int. Cl.³: **B 29 F 3/00**, B 29 F 3/02

(30) Priority: **29.10.81 US 316076**

(43) Date of publication of application: **11.05.83**
**Bulletin 83/19**

(84) Designated Contracting States: **BE DE FR GB IT SE**

(71) Applicant: **UNION CARBIDE CORPORATION, Old Ridgebury Road, Danbury Connecticut 06817 (US)**

(72) Inventor: **Jones, David Nunn, 323 Pleasant Grove Road, Long Valley New Jersey 07853 (US)**

(74) Representative: **Barz, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40 (DE)**

(54) **Method for extrusion of linear polyolefin materials.**

(57) In the extrusion of low-density, linear polyolefin materials having high viscosities, wherein such materials are continuously fed to and through a rotary extruder having an extruder housing (10) defining a cylindrical interior and containing an extruder screw (12) having helical screw flight(s) having solids conveying, melting and metering function, the improvement which comprises employing, on at least the root surfaces of screw threads only in the portion of said screw providing the solids conveying function, a surface coating of a low coefficient of friction material.

EP 0 078 515 A1

## METHOD FOR EXTRUSION OF LINEAR POLYOLEFIN MATERIALS

The present invention relates to a method for the extrusion of linear polyolefin material such as polyethylene.

Conventional·low density polyethylene has been historically polymerized in heavy walled autoclaves or tubular reactors at pressures as high as 50,000 psi and temperatures up to 300°C. The molecular structure of high pressure, low density polyethylene (HP-LDPE) is highly complex. The permutations in the arrangement of their simple building blocks are essentially infinite. HP-LDPE's are characterized by an intricate long chain branches have a dramatic effect on the melt rheology of these resins. HP-LDPE's also possess a spectrum of short chain branches, generally 1 to 6 carbon atoms in length. These short chain branches disrupt crystal formation and depress resin density.

With recent developments in low pressure technology, low density narrow molecular weight distribution linear ethylene polymers can now be produced at low pressures and temperatures by copolymerizing ethylene with various alphaolefins. These low pressure LDPE (LP-LDPE) resins generally possess little, if any, long chain branching. They are short chain branched with branch length and frequency controlled by the type and amount of comonomer used during polymerization.

European Patent Publication No. 004,645 discloses that ethylene copolymers, having a density of 0.91 to 0.96, a melt flow ratio of $\geq 22$ to $\leq 32$ and a relatively low residual catalyst content can be produced in granular form, at relatively high productivities if the monomer(s) are copolymerized in a gas phase process with a specific high activity Mg-Ti containing complex catalyst which is blended with an inert carrier material.

European Patent Publication No. 004,647 discloses that ethylene copolymers, having a density of 0.91 to 0.96, a melt flow ratio of $\geq 22$ to $\leq 32$ and a relatively low residual catalyst content can be produced in granular form, at relatively high productivities, if the monomer(s) are copolymerized in a gas phase process with a specific high-activity Mg-Ti containing complex catalyst which is impregnated in a porous inert carrier material.

European Patent Publication No. 004,646 discloses that ethylene homopolymers having a density of about $\geq 0.958$ to $\leq 0.972$ and a melt flow ratio of about $\geq 22$ to about $\leq 32$ which have a relatively low residual catalyst residue can be produced at relatively high productivities for commercial purposes by a low pressure gas phase process if the ethylene is homopolymerized in the presence of a high-activity Mg-Ti-containing complex catalyst which is blended with an inert carrier material. The granular polymers thus produced are useful for a variety of end-use applications.

The polymers as produced, for example, by the processes of said applications using the Mg-Ti containing complex catalyst possess a narrow molecular weight distribution, Mw/Mn, of about $\geq 2.7$ to $\leq 4.1$.

Over the years, film extrusion equipment has been optimized for the rheology of HP-LDPE. The different molecular architecture of low pressure-low density polyethylene (LP-LDPE) result in a film processing behavior which requires different extrusion parameters. By way of background, conventional extruder screws commonly used for HP-LDPE include an cylindrical barrel which may be heated or cooled at various locations along its length and a screw which extends longitudinally through the barrel. The screw has a helical land(s) on its surface which cooperates with the cylindrical internal surface of the barrel to define an elongated helical channel(s). Although the pitch of the screw may vary along the length thereof, it is common at the present time to utilize screws of constant pitch wherein the pitch is "square", that is, where the distance between equivalent locations on adjacent flights is equal to the diameter. The screw is rotated about its own axis to work the plastic material and feed it toward the outlet end of the barrel.

An extruder screw ordinarily has a plurality of sections which are of configuration specially suited to the attainment of particular functions. Examples are "soldis conveying" or "feed" sections and "metering" sections, which are of basic importance and are present in nearly all extruders for handling thermoplastic polymers. Other extruder screws may be so designed as to provide the typical solids conveying, melting and metering functions without clear geometrical delineations of the sections which provide these functions.

A typical extruder screw feed section extends beneath and forwardly from a feed opening where polymer in pellet or powder form is introduced into the extruder to be carried forward along the inside of the barrel by the feed section of the screw. In this section the channel depth of the screw is usually large enough to over-feed the solid polymer. This is a desirable effect because the over-feeding action serves to compact and pressurize the polymer particles and form a solid bed of advancing material.

The working of the material generates heat, and melting of the polymer proceeds as the material is moved along the feed section of the screw. Actually, most of the melting occurs near the barrel surface at the interface between a thin melt film and the solid bed of polymer. This general pattern persists until a substantial portion of the polymer reaches the melted state. After some 40 to 70 percent of the polymer has been melted, solid bed breakup usually occurs, and at this time particles of solid polymer become dispersed in the polymer melt. From this point on, it often is advantageous to intimately mix the polymer melt with the unmelted material to accelerate melting and minimize local non-uniformities.

An extruder screw "metering" section has as its special function the exertion of a pumping action on the molten polymer. Ordinarily the throughput achieved by a screw is thought of as being a function of the combination of the "drag flow" and "pressure flow" effects of the metering section.

Drag flow is basically the flow which results from the relative movement between the screw and the internal surface of the extruder barrel. It may be thought of as being proportional to the product of the average relative velocity and the channel cross-sectional area. This drag flow component is directed toward the outlet end of the screw. It may be increased by increasing the speed of the screw and/or by increasing the depth of the flow channel in the screw.

Action in opposition from the reluctance of the material to flow through the restricted outlet opening at the end of the extruder passage. The speed of the screw does not directly affect the pressure flow component but of course it may afffect such factors as back pressure and material viscosity, which factors, in turn, affect significantly the pressure flow component. On the other hand pressure flow is directly affected by both the depth and length of the screw channel; an increase in channel depth has a tendency to increase greatly the pressure flow component and an increase in channel length has a tendency to reduce this back flow component.

In addition to the basic solids conveying and "metering" sections, an extruder screw also may include a number of other distinct sections. Nearly all screws include, for example, so called "transition" sections. Also a final downstream mixing section may preferably be employed.

Over the years there has been a trend toward the use of extruders capable of high outputs. In many applications, various economies in production are possible where high extruder outputs can be obtained on a reliable basis.

Although LP-LDPE resins can be extruded on equipment designed for HP-LDPE resins, such as described above, certain equipment modifications are often required in order to extrude the low pressure, high viscosity resins at optimum conditions and at rates comparable to the high pressure resins. This is particularly true during extrusion of LP LDPE which is subsequently processed into film by passage through the breaker plate of the extruder with conventional film forming dies as are well knwon to the art.

Efficient, rapid solids conveying in extruders is critical to the economical performance of conventional extrusion operations. Reductions in screw solids conveying efficiency will result in reduced production rates, higher melt temperatures, higher cooling costs, and reduced product quality. Solids conveying becomes especially important in the feeding of low bulk density resins, such as certain granulars, which directly result in reduced feeding by virtue of the lower bulk density.

Thus, an improved extrusion process is required for employment in single and multi-screw extruders to provide an increased solids conveying rate which may result from a controlled, selected reduction in the screw coefficient of friction.

It has been found that, while the prior art has suggested the reduction of screw coefficient of friction throughout the entire length of the conveying screw, significant additional extrusion efficiency can be achieved by the reduction by a reduction of the screw coefficient of friction only in selected zones of the screw. More specifically, it as been found that reduction of screw coefficient of friction in the section of the screw which provides the solids conveying function alone provides an unexpected improvement in both specific extrusion rate (SR) as well as melt temperature (MT) by the extruder.

In accordance with the present invention, the extrusion of low-density, linear polyolefin materials having high viscosities, wherein such materials are continuously fed to and through a rotary extruder having an extruder housing defining a cylindrical interior and containing an extruder screw having helical screw flights having feeding, transition and metering sections, an improved method is provided which comprises employing, on at least the root surfaces of screw threads only in the section of said screw which provides the solids conveying function, a surface coating of a low coefficient of friction material.

The surface coating of low coefficient of friction material as employed in the present invention is applied only to the root or base surfaces of the threads in the solids conveying section of the screw. Some overlapping from the base or root surfaces to the inclined surface of the screw is permissible and has been found to provide no significant change from a coating of the root surfaces alone. However, it

0078515

It is also to be noted that the barrel lining material (normally of carbon steel) may also preferably be formed by nitriding of the steel barrel.

The reference texts, such as Engineering Principles of Plasticating Extrusion, Tadmor and Klein, Robert E. Krieger Publ. Co. Huntington, N.Y. (1978), set forth lengthy and complex equations for approximating solid conveying rates through an extruder. From these equations one can derive other relationships which indicate the desirablility of decreasing the ratio of the coefficient of friction between the screw and the polymer to the coefficient of friction between the extruder barrel and the polymer. Thus, the flow rate is increased as the ratio of COF of the screw to the COF of the barrel is decreased.

The COF of an Xalloy 101 coated carbon steel barrel is of the order of 0.30 to 0.40. The COF of screws treated in accordance with the present invention is of the order of 0.05 to 0.22, whereas the COF of untreated screw, is of the order of 0.22 to 0.35. It can be seen that the flow rate of the extrusion process can be considerably affected by the selection of extruder barrel coating and low COF screw coating material in accordance with the invention.

Any one of a number of processes may be employed for coating the screw roots of the feeding section. A polytetrafluoroethylene tape may be applied to the root surfaces of the feeding section, such tape being commercially available from polytetrafluoroethylene producers such as E.I. duPont de Nemours and Co. of Wilmington, Delaware. Alternatively, the polytetrafluoroethylene material coating may be applied by a process, such as provided by General Magnaplate Company of Linden, New Jersey, wherein polytetrafluoroethylene is embedded in a metal matrix to obtain a hard durable but low friction coefficient surface. Other processes for effecting the deposition of such coating will be apparent to those is significant that such low coefficient of friction material be applied to the root surfaces of the screw threads of only the section of the screw providing solids conveying, rather than all threads of the screw as was suggested by the prior art. Such prior art application provided a marked improvement in the specific extrusion rate, but only a partial reduction in melt temperature, as against the method of the present invention wherein selective surface coating is confined to the screw thread roots of the feeding section alone.

An improved extrusion process is provided for single screw extruders to increase solids conveying rates through a controlled, selective reduction in feed zone screw coefficient of friction. Solids conveying efficiency is improved by a net increase in the ratio between the screw to polymer and barrel to polymer coefficients of friction. Achievement of this reduction in screw friction coefficient may be accomplished via several techniques, for example, the use of a low friction coating such as "Teflon". Results of studies performed evaluating this technique are set forth herein.

The preferred barrel surface coating is Xalloy 101 (sold by Xalloy, Inc. of New Brunswick, New Jersey 08903). This alloy has the following compositions:

| Material | (°/o) |
|----------|-------|
| C | 2-4 |
| Mn | 2 Man. |
| Si | 1.5 Max |
| B | 0.5-1.25 |
| C | 0.1-1.4 |
| Ni | 2.5-5 |
| Free of Co and W | |
| Fe | Balance. |

skilled in the art and include the application of coatings of ultrahigh molecular weight polyethylenes, polyphenolene sulfide, fluorinated polyepoxides, phenolics, polyimids, polysulfones and polyarylketones, and dispersions of tetrafluorocarbons in other polymeric resins, and the like.

As employed herein, the term "polytetrafluoroethylene material" is understood to mean any available tetrafluoroethylene polymer including homopolymers, copolymers and blends of tetrafluoroethylene, however made. The preferred low coefficient of friction coating material is such a polytetrafluoroethylene material.

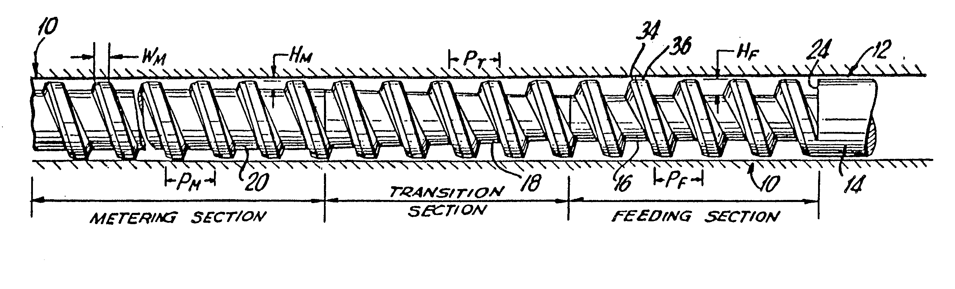

In the accompanying drawing, the single figure is a partial vertical elevational schematic view, partially in section, of an extruder capable of carrying out the method of the present invention.

Referring specifically to the screw extruder of the drawing, an outer extruder barrel or housing 10 is provided having a multi-section extruder screw 12 positioned therein and having, in turn, a shank position 14 at the rearward end thereof; a feeding section 16 immediately downstream thereof; a transition section 18; and a metering section 20 downstream thereof.

The feeding, transition and metering sections of the screw have all threads, preferably of equal lead in transition and metering sections, and of increased lead in the feeding section.

The linear polyolefin material to be extruded is fed in granular form (not shown) through the extruder housing 10 near the upstream end 24 of feeding section 16. The granular material is thus passed through the feeding section having a uniform root depth $H_F$ and is initially compacted and compressed in the feeding section which serves to develop heat within the material and effect the beginning of melting of the solid material by the time it is passed into the transition section 18.

In the transition section, the screw root depth successively decreases from a value of $H_F$ to a value of $H_M$, the screw root depth of the metering section.

The coating of low coefficient of friction material is applied to the roots of the feeding section located at the depth of $H_F$ from the outer diameter of the screw.

The transition section has a length of approximately five times the normal screw diameter. Material passing through the section continues to melt, initially interfaces between already molten polymer and solid compacted granular material, to a point where solid particles break up and small particles of solid polymer become dispersed in the main body of primarily molten polymer material.

Tests were conducted employing a 2 1/2 inch diameter extruder of the type shown in the drawings. Such tests provided comparative data for extruders employing an uncoated standared screw, as against a screw embodying an invention having a polytetrafluoroethylene coating on all of the screw roots surfaces in the feeding section and the prior art having polytetrafluoroethylene coating on all the roots surfaces of the screws.

The data set forth in the following table shows the improvement (from both the specific extrusion rate and melt temperature standpoints) of polytetrafluoroethylene coating of all of the root surfaces of the screw as well as the further unexpected improvement in melt temperature data by limiting the coating of the surfaces to those of the roots of the feeding section alone.

### TABLE

#### EFFECT OF SCREW COATING ON
#### SPECIFIC EXTRUSION RATE (SR) AND MELT TEMPERATURE (MT)

| | (RPM) | | 40 | | 80 | | 120 | |
|---|---|---|---|---|---|---|---|---|
| Screw | Resin | | 0 Psi | 1000 Psi | 0 Psi | 1000 Psi | 0 Psi | 1000 Psi |
| Chrome (Standard) | Neat Resin[1] | SR | 1.00 | 1.00 | 1.01 | 1.00 | 0.99 | 1.00 |
| | | MT | 186 | 197 | 191 | 204 | 192 | 208 |
| | Resin + 10°/• Fluff | SR | 0.83 | 0.84 | 0.85 | 0.84 | 0.85 | 0.85 |
| | | MT | 192 | 201 | 195 | 208 | 198–200 | 212 |
| TFE in Feed (11-1/4") | Neat Resin | SR | 1.84 | 1.79 | 1.89 | 1.80 | 1.89 | 1.79 |
| | | MT | 179 | 181 | 169 | 182 | 177 | 192 |
| | Resin + 10°/• Fluff | SR | 1.57 | 1.49 | 1.56 | 1.52 | 1.58 | 1.50 |
| | | MT | 169 | 181 | 174 | 183 | 181 | 195 |
| TFE on Whole Screw | Neat Resin | SR | 1.88 | 1.78 | 1.87 | 1.81 | 1.88 | 1.79 |
| | | MT | 182 | 188 | 175 | 188 | 182 | 198 |
| | Resin + 10°/• Fluff | SR | 1.56 | 1.50 | 1.57 | 1.52 | 1.59 | 1.50 |
| | | MT | 173 | 183 | 178 | 180 | 188 | 195 |

[1]Granular - DEFG - 7047;   SR - Lbs/hr RPM   MT - °C

Screw Design - 16.1 L/D - 2 1/2" NRM Extruder Screw
          Feed        -   4.5 D      0.450" deep
          Transition  -   4.0 D      0.450" to .160" deep
          Metering    -   5.0 D      0.160" deep
          Mixing      -   2.4 D      5 channel - ouside-in type
          Lead        -   1.4 x D - 3.5 inches

It is to be noted that the linear polyolefin material employed in the tests set forth in the TABLE consisted of a Unipol Process film grade copolymer of ethylene and butene-1 having a density of 0.92 and melt index of 1.0. The $10^\circ/$ (weight) regrind material consisted of a similar copolymer having a density of 0.92 and a melt index of 2.0.

CLAIMS:

1. A method for extrusion of low-density, linear polyolefin materials having high viscosities, wherein such materials are continuously fed to and through a rotary extruder having an extruder housing defining a cylindrical interior and containing an extruder screw having helical screw flight(s) having solids conveying, melting and metering functions, characterized by employing, on at least the root surfaces of screw threads in only the portion of said screw, which provides the solids conveying function, a surface coating of a low coefficient of friction material.

2. The method of claim 1, wherein said low coefficient material comprises a polytetrafluoroethylene material.

0078515

EUROPEAN SEARCH REPORT

**0078515**

Application number

**EUROPEAN SEARCH REPORT**

European Patent Office

# DOCUMENTS CONSIDERED TO BE RELEVANT

EP 82109990.0

| Category | Citation of document with indication, where appropriate, of relevant passages | Relevant to claim | CLASSIFICATION OF THE APPLICATION (Int. Cl. ³) |
|---|---|---|---|
| A | GB - A - 1 248 642 (SUN OIL)<br>* Totality * | | B 29 F 3/00<br>B 29 F 3/02 |
| A | GB - A - 1 351 751 (BAKELITE XYLO-NITE)<br>* Page 2, lines 86-125; fig. 1-3 * | | |
| A | US - A - 2 403 476 (BERRY et al.)<br>* Totality * | | |

|  | TECHNICAL FIELDS SEARCHED (Int. Cl. ³) |
|---|---|
|  | B 29 F 3/00<br>B 29 F 3/00<br>B 29 B 1/00 |

| X | The present search report has been drawn up for all claims | | |
|---|---|---|---|
| Place of search<br>VIENNA | Date of completion of the search<br>21-01-1983 | Examiner<br>BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

| | | | | |
|---|---|---|---|---|
| **DOCUMENTS CONSIDERED TO BE RELEVANT** | | | | EP 82109990.0 |
| Category | Citation of document with indication, where appropriate, of relevant passages | | Relevant to claim | CLASSIFICATION OF THE APPLICATION (Int. Cl. ³) |
| D,A | US - A - 3 260 774 (N.R. HARLOW)<br><br>---- | | 1,2 | B 29 F 3/00<br>B 29 F 3/02 |
| | | | | **TECHNICAL FIELDS SEARCHED (Int. Cl. ³)** |
| | | | | B 29 F 3/10 |
| | The present search report has been drawn up for all claims | | | |

| Place of search | Date of completion of the search | Examiner |
|---|---|---|
| VIENNA | 07-02-1983 | BAUMGARTNER |